# EUROPEAN PATENT SPECIFICATION

(11) **EP 0 656 427 B1**
(45) Date of publication and mention of the grant of the patent: **21.08.2002**
(21) Application number: 94118219.8
(22) Date of filing: 18.11.1994
(51) Int. Cl.: C21D 9/52, C21D 9/02, F16F 1/04

(54) **Oil-tempered wire and process for producing the same**
Ölgehärtete Drähte und Verfahren zu ihrer Herstellung
Fils trempés à l'huile et procédé pour leur fabrication

(30) Priority: 18.11.1993 JP 31439693; 16.04.1994 JP 10200694
(43) Date of publication of application: 07.06.1995
(73) Proprietor: SUMITOMO ELECTRIC INDUSTRIES, LTD., Osaka-shi, Osaka 541 (JP)
(72) Inventor: Murai, Teruyuki, c/o Itami Works of Sumitomo, Itami-shi, Hyogo (JP); Nakamura, Toshiya, c/o Itami Works of Sumitomo, Itami-shi, Hyogo (JP); Shirabe, Kimijiro, c/o Itami Works of Sumitomo, Itami-shi, Hyogo (JP)
(74) Representative: Grünecker, Kinkeldey, Stockmair & Schwanhäusser Anwaltssozietät

(56) References cited:
- US-A- 2 224 998
- US-A- 2 535 284
- US-A- 4 174 981
- PATENT ABSTRACTS OF JAPAN vol. 12, no. 372 (C-533) (3219) 5 October 1988 & JP-A-63 121 671 (SUZUKI KINZOKU KOGYO) 25 May 1988
- DATABASE WPI Week 8940, Derwent Publications Ltd., London, GB; AN 89-290855 & JP-A-1 215 407 (NIHON PARKERIZING ET AL) 29 August 1989
- PATENT ABSTRACTS OF JAPAN vol. 15, no. 491 (M-1190) 12 December 1991 & JP-A-03 213 735 (SUMITOMO ELECTRIC) 19 September 1991
- DATABASE WPI Week 8338, Derwent Publications Ltd., London, GB; AN 83-767884 & JP-A-58 135 719 (SUMITOMO ELECTRIC) 12 August 1983

## Description

### FIELD OF THE INVENTION

The present invention relates to an oil-tempered wire improved in spring formability and efficiency of nitriding treatment, and also to a process for producing the oil-tempered wire.

### BACKGROUND OF THE INVENTION

Since oil-tempered wires have poor surface lubricity, high-speed spring formation therefrom causes seizing on the wire surface or yields coiled springs having fluctuations in free length or coil diameter. There has been another drawback that a so-called stick slip noise is produced to impair the working environment. These drawbacks become more serious as the wire strength becomes higher.

For overcoming such problems, the following attempts have conventionally been taken:
(i) A 2 to 5 µm-thick oxide film consisting mainly of magnetite (Fe₃O₄), which has relatively high lubricating properties among iron oxides is formed, on a wire surface to thereby improve the lubricity of the wire surface.
(ii) The bending part of a coiling machine is rotated with the progress of the wire to reduce the coefficient of friction between the wire and the bending part to thereby enable high-speed spring formation.

However, the technique of improving lubricity by means of an oxide film (attempt (i) above) is defective in that since the necessary oxide film thickness is large (e.g., 2 µm or more), debris of the remaining surface layer consisting mainly of the oxide film scatter during spring formation to impair the working environment. In addition, this technique has had another drawback that oxidation occurs occasionally at grain boundaries during the formation of an oxide film and this causes microcracks on the wire surface during spring formation, resulting in reduced fatigue properties of the spring.

In JP-A-58 135 719 a surface film of uniform thickness of art least 2 µm is formed on the wire to be coiled to spring consisting of a lubricating agent residue and an oxide generated at the time of heat treatment.

In general, nitriding treatment is conducted after spring formation for the purpose of improving the fatigue property of the spring. The thicker the oxide film, the lower the efficiency of the nitriding treatment (as described in JP-A-5-177544). (The term "JP-A" as used herein means an "unexamined published Japanese patent application.) There has hence been a problem that a step for removing the oxide film prior to the nitriding treatment is necessary or much time is required for the nitriding treatment.

### SUMMARY OF THE INVENTION

An object of the present invention is to provide an oil-tempered wire and a process for producing the same, in which the above-described prior art problems are eliminated, i.e., the scattering of oxide-film debris can be diminished without reducing lubricity in spring formation, so that the working environment can be improved; the fatigue properties of the spring obtained can be prevented from decreasing by inhibiting the occasional occurrence of microcracks attributable to an oxide film; the time required for the step of removing the oxide film before nitriding treatment can be reduced or that step can be omitted; and the time required for nitriding treatment can be reduced to improve the efficiency of nitriding treatment.

Other objects and effects of the present invention will be apparent from the following description.

The inventors of the present invention have conducted extensive investigations, and as a result, the inventors have found that the above objects can be attained by forming on the surface of a steel wire an oxide film as thin as possible and then forming a coating film comprising a lubricating oil and/or an organic compound on the oxide film.

The present invention relates to an oil-tempered wire comprising a steel wire having thereon an oxide film having a thickness of from 1.0 µm to 0.5 µm, and further having thereon a lubricating coating film comprising at least one of a lubricating oil and an organic compound.

The present invention also relates to a process for producing an oil-tempered wire, the process comprising the steps of:
cleaning a drawn wire by a chemical or mechanical means to remove any pretreating agent or drawing lubricant remaining on the surface of the drawn wire;
heating the cleaned wire in an atmosphere of an inert gas or nitrogen;
quenching the heated wire to conduct hardening;
tempering the hardened wire in an inert gas or nitrogen atmosphere to have an oxide film having a thickness of from 1.0 µm to 0.5 µm on the surface of the wire; and
forming on the oxide film a coating film comprising at least one of a lubricating oil and an organic compound.

The present invention further relates to a coiled spring produced by coiling the above oil-tempered wire.

### BRIEF DESCRIPTION OF THE DRAWINGS

Fig. 1 is a graph showing the relationship between the time for oxide film removal and wire hardness after nitriding treatment.

Fig. 2 is a graph showing the relationship between the time for nitriding treatment and wire hardness after nitriding treatment.

### DETAILED DESCRIPTION OF THE INVENTION

The steel wire used in the oil-tempered wire of the present invention may be any ordinary drawn wires, such as those composed of silicon-chromium steel, silicon-manganese steel, chromium-vanadium steel and the like. The diameter of the steel wire are not particularly limited and is preferably from 2.0 to 10.0 mm.

The thickness of the oxide film is from 0.5 to 1.0 µm.

The amount of the lubricating coating film is preferably from 3 to 15 g/m², and preferably from 5 to 10 g/m².

The lubricating oil used as the lubricating coating film of the present invention is not particularly limited and may be ordinary mineral lubricating oils.

Examples of the organic compound constituting the lubricating coating film include a polytrifluoroethylene resin, a polytetrafluoroethylene resin, and an amino acid compound.

Examples of the amino acid compound include compounds obtained from amino acids with fatty acids. Examples of the amino acid include lysine, arginine, and histidine. Examples of the fatty acid include acrylic acid, lauric acid, aspartic acid, and stearic acid.

Although only forming an oxide film having a reduced thickness will suffice to inhibit the scattering of oxide-film debris, the reduced oxide-film thickness necessarily results in a decrease in lubricity in spring formation. In the present invention, therefore, both lubricity in spring formation and the diminution of the scattering of oxide-film debris are attained by forming a lubricating coating film on the oxide film as thin as 1.0 µm or less. In determining this thickness of 1.0 µm or less for the oxide film, the efficiency of the nitriding treatment conducted after spring formation and the amount of oxide-film debris scattered during spring formation were taken in account.

When the lubricating coating film consists only of an organic compound, there are cases where the coating film itself scatters during spring formation. This scattering, however, can be inhibited by using the organic compound in combination with a lubricating oil.

Conventionally, lubricity has been obtained by means of a thick oxide film only. However, this technique has had a drawback that it is difficult to evenly form a thick oxide film over the length of a wire and, hence, the resulting wire has fluctuations in lubricity in spring formation to yield springs which are apt to have fluctuations in free length. In contrast, the wire of the present invention can give springs with reduced fluctuations in free length because it has an oxide film with a reduced thickness and further has a lubricating coating film comprising, e.g., an amino acid compound, which is uniformly applicable even over the length of a wire.

Moreover, although wires having a thick oxide film are apt to develop microcracks on the wire surface due to oxidation at grain boundaries, the wire of this invention is free from this problem because its oxide film is thin. Consequently, the fatigue properties of springs can be inhibited from decreasing.

In particular, the reduced thickness of the oxide film enables not only a reduction in the time required for removing the oxide film before nitriding treatment, or omission of the step for removing the oxide film, but also a reduction in the time required for nitriding treatment.

The formation of the oxide film occurs throughout the production process of the oil-tempered wire according to the present invention, which includes the following steps:

### (1) Cleaning Step:

A drawn wire which has been obtained by drawing a steel wire to a desired diameter, is cleaned by a chemical or mechanical means to remove any pretreating agent for drawing or drawing lubricant remaining on the surface of the wire. The chemical or mechanical means for cleaning the drawn wire is not particularly limited, and any conventional means can be employed. For example, the chemical cleaning may be conducted by immersing the wire into an acid, to which an ultrasonic vibration may optionally be applied, and the mechanical cleaning may be conducted by shot blasting.

After drawing, the surface of the wire has a little oxide film, but a pretreating agent for drawing and a drawing lubricant remain thereon. These agents may accelerate the oxidation of the wire-constituting iron during heating for quenching and will remain along with the oxide film to be formed during the heating for quenching.

Therefore, prior to the formation of an oxide film, the pretreating agent for drawing and the lubricant are removed from the surface of the drawn wire. By thus removing these agents, the amount of an oxide etc. which will remain on the wire surface after quenching can be reduced.

### (2) Heating Step:

The cleaned wire is heated in either an atmosphere of an inert gas (e.g., Ar, He), nitrogen, or a molten metal, e.g., lead. A molten metal is generally used for preheating before heating in an inert gas or nitrogen and preferably should not be used as a sole heating atmosphere. The heating temperature can be appropriately determined by considering the composition of the wire for effectively attaining subsequent quenching for hardening and the strength of the oil-tempered wire, for example, from 800 to 1,200°C.

An oxide film is formed in the largest amount in this step. Since the formation of an oxide film in this step is attributable mainly to oxidation by oxygen contained in the air, the amount of the oxide film formed on the wire surface can be reduced extremely by conducting the heating in an inert gas atmosphere. Thus, a thin oxide film can be easily formed.

### (3) Quenching Step:

The heated wire is quenched to conduct hardening. It is preferred that the quenching for hardening be conducted in water or in an aqueous solution containing a quenching regulator such as an organic compound including a watersoluble polymer, e.g., polyoxiethylene-propylenepolyether.

Further oxidation does not especially take place in this step. However, the higher the cooling rate, the larger the difference in thermal shrinkage between the steel wire and the oxide film and, hence, the more the oxide film is apt to peel off. Therefore, when the quenching for hardening is conducted in water or in an aqueous solution containing an organic-compound - quenching regulator, a higher cooling rate than in conventional oil quenching is possible, and the difference in thermal shrinkage between the steel wire and the oxide film can be increased to thereby accelerate the peeling of the oxide film. This quenching method is therefore more effective.

### (4) Tempering Step:

The hardened wire is tempered in either an inert gas or nitrogen atmosphere or a molten metal, e.g., lead. The temperature of the tempering step can be appropriately determined by considering the composition and intended strength of the oil-tempered wire, for example, from 400 to 500°C.

The formation of an oxide film is relatively slight because of the temperature which is lower than in the heating for quenching . However, the formation of an oxide film is inhibited by using an inert gas or nitrogen atmosphere for the same reason as in the heating for quenching.

After the tempering step, the wire has an oxide film having a thickness of 0.5-1.0 µm on its surface.

### (5) Formation of Coating Film:

A coating film comprising a lubricating oil and/or an organic compound is formed on the wire having-an oxide film. The method for forming the coating film is not particularly limited and may be any conventional coating methods. For example, the wire may be dipped in a material of the coating film; the material may be poured on the wire; the wire may be dipped in a solution or dispersion of the material, followed by drying; or the solution or dispersion may be poured on the wire, followed by drying.

The present invention will be explained below by reference to Examples, but the present invention is not construed as being limited thereto.

### Preparation of Samples

Three kinds of wires having the compositions as shown in Table 1 were drawn to a diameter of 4 mm and then subjected to treatments for quenching and tempering to produce oil-tempered wire samples.

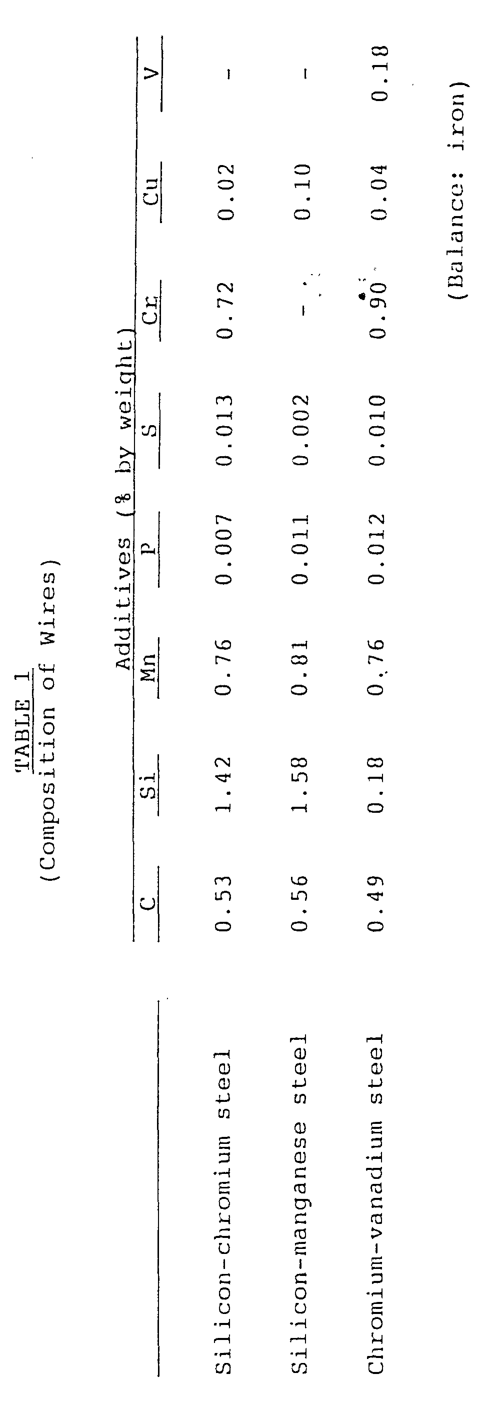

Prior to the quenching and tempering, the pretreating agent for drawing and the drawing lubricant were removed from the surface of each wire by chemical cleaning (immersed in an acid). The cleaned wires were then heated to 900°C in a nitrogen gas atmosphere and immediately thereafter immersed in water to conduct quenching treatment. Subsequently, tempering treatment was carried out in a nitrogen gas atmosphere at 500°C. The resulting wires were coated with a lubricating coating film comprising an amino acid compound by pouring a water dispersion of the amino acid compound on the wire, followed by drying.

As comparative samples, conventional oil-tempered wires were also produced, which had the same compositions as those shown in Table 1 and which had an oxide film as thick as 2 µm or more and had no lubricating coating film.

Mechanical properties of these wires of the invention and those for comparison and the average oxide-film thicknesses therein are shown in Tables 2 and 3. Sample Nos. 1-1 to 3-2 shown in Table 2 are samples according to the present invention, and Sample Nos. 4-1 to 6-3 shown in Table 3 are comparative samples.

The average oxide-film thickness in each wire was an average of found values determined by cutting the wire at an arbitrary point, grinding the section, and microscopically measuring the oxide-film thickness at eight points in respective eight equal parts into which the circumference of the section had been divided.

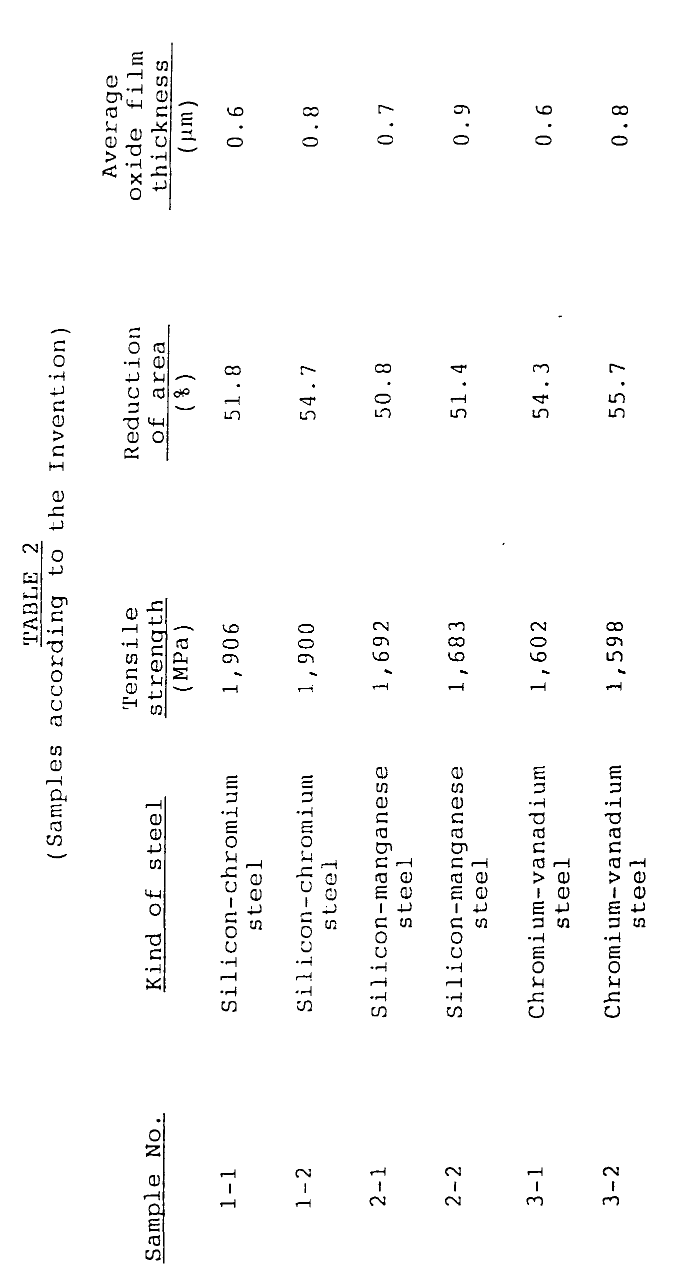

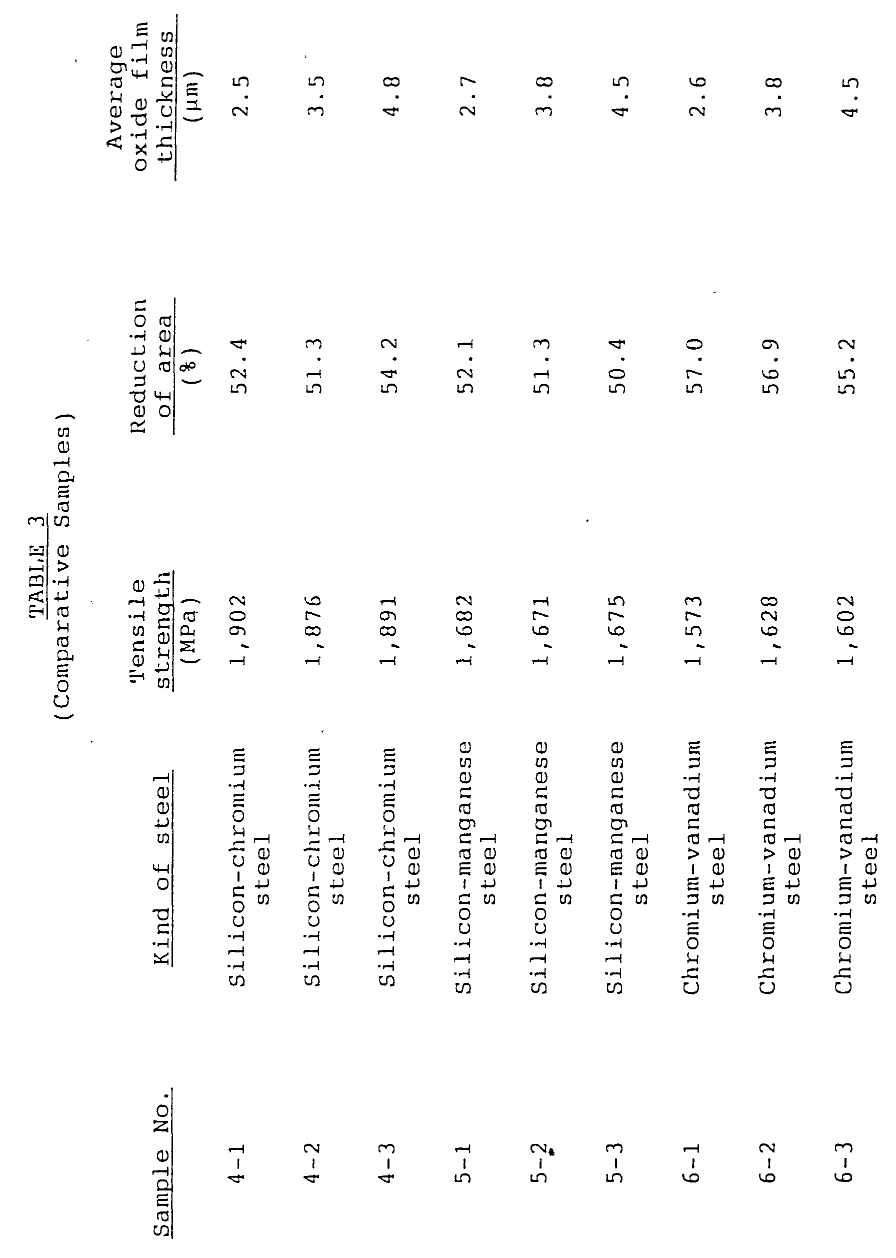

### EXAMPLE 1

### (Free Spring Length and Oxide Film Scattering)

Using each of the wire samples, 10,000 springs were formed in which the average spring diameter was 22.8 mm, the number of turns was 6.5, and the free length was 26 mm. Fluctuations in free length and the degree of the scattering of oxide-film debris during spring formation were examined. The degree of scattering of oxide-film debris that are as severe as in the prior art are graded "severe", and those that are suppressed to effectively improve the working environment are graded "slight". The threshold value of the scattering amount of oxide-film debris between "slight" and "severe" was 25 g per 1 ton of the wire. The results obtained are shown in Table 4.

**TABLE 4**

| Sample No. | Standard deviation in free spring length (mm) | Degree of oxide film scattering |
|---|---|---|
| 1-1 | 0.11 | slight |
| 1-2 | 0.10 | slight |
| 2-1 | 0.12 | slight |
| 2-2 | 0.13 | slight |
| 3-1 | 0.10 | slight |
| 3-2 | 0.13 | slight |
| 4-1^{*} | 0.19 | severe |
| 4-2^{*} | 0.24 | severe |
| 4-3^{*} | 0.26 | severe |
| 5-1^{*} | 0.20 | severe |
| 5-2^{*} | 0.26 | severe |
| 5-3^{*} | 0.28 | severe |
| 6-1^{*} | 0.22 | severe |
| 6-2^{*} | 0.25 | severe |
| 6-3^{*} | 0.26 | severe |

| | | |
|---|---|---|
| Note: * Samples Nos. 4-1 to 6-3 are comparative samples. | | |

As shown in Table 4, it was ascertained that the springs of the comparative samples, which had a thick oxide film, had large standard deviations in free spring length and underwent considerable scattering, whereas the springs of the invention, which had a thin oxide film, each had been improved in these respects.

### EXAMPLE 2

### (Fatigue Strength)

Springs of sample Nos. 1-2, 2-2, 4-2, and 5-2 produced in Example 1 were then subjected to a fatigue test, in which each sample was examined for fatigue strength (τₘ ± τₐ: τₘ=average stress, τₐ=stress amplitude) throughout 5x10⁷ cycles at an average stress of 588 MPa. The results obtained are shown in Table 5.

**TABLE 5**

| Sample No. | Fatigue strength (MPa) |
|---|---|
| 1-2 | 588 ± 436 |
| 2-2 | 588 ± 382 |
| 4-2^{*} | 588 ± 415 |
| 5-2^{*} | 588 ± 364 |

| | |
|---|---|
| Note: * Samples Nos. 4-2 and 5-2 are comparative samples. | |

As shown in Table 5, it was ascertained that the samples of the invention were superior in fatigue properties to those of the comparative samples. This is because springs having a thinner oxide film are less apt to develop microcracks on the surface thereof.

### EXAMPLE 3

Springs of sample Nos. 1-2 (this invention) and 4-2 (comparison) produced in Example 1 were examined for the efficiency of nitriding treatment after removal of the oxide film was conducted with variation of the removal time. As a method for oxide film removal, shot blasting with steel balls having a diameter of 0.3 mm was employed among various techniques including electropolishing , acid pickling, shot blasting, and shot peening. The springs which had undergone the treatment for oxide film removal with variation of the removal time were nitrided at 450°C for an ignition period of 4 hours, and the hardness (Vickers hardness) of each resulting spring wire was measured at eight points along the circumference of a section of the wire at a depth of 20 µm from the wire surface. Higher values of hardness indicate that the nitriding treatment had been conducted at higher efficiencies.

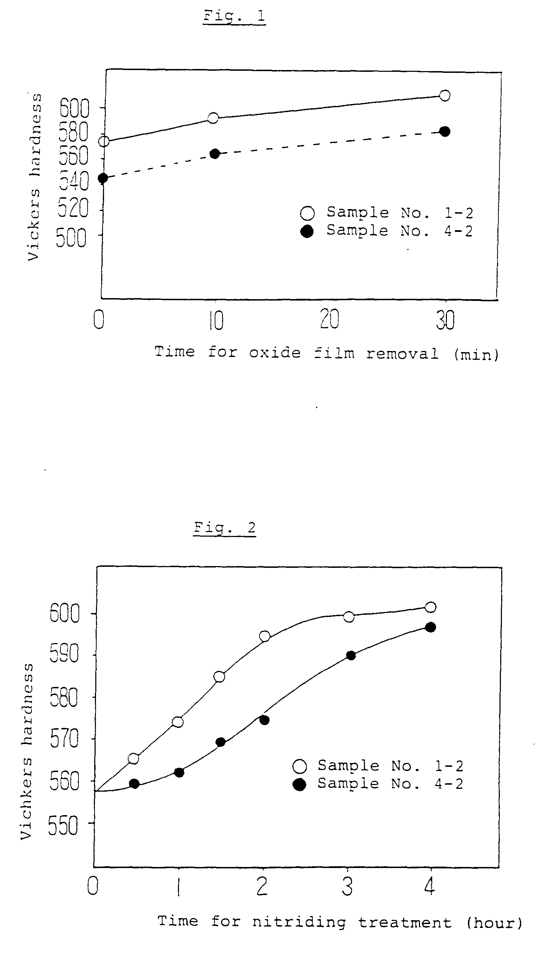

The results given in Fig. 1 show that the spring of the invention had a higher hardness than the spring of the comparative sample when these samples had undergone the oxide-film-removing treatment for the same period. That is, the spring of the invention was superior in nitriding efficiency.

Further, the spring of the invention which had not undergone the oxide-film-removing treatment (time for oxide film removal, 0 minute) had almost the same hardness as the spring of the comparative sample in which the time for oxide film removal was 30 minutes. It was thus ascertained that the step for oxide film removal can be omitted.

### EXAMPLE 4

The same springs as those examined in Example 3 (Samples Nos. 1-2 and 4-2) were subjected to the 30-minute treatment for oxide film removal and then to 450°C nitriding treatment for various ignition periods. The wire hardness in each resulting spring was measured in the same manner as in Example 3 to examine the efficiency of the nitriding treatment. The results given in Fig. 2 show that the wire hardness in the spring of the invention increased more rapidly than that in the spring of the comparative sample, indicating that the spring of the invention was superior in nitriding efficiency. For example, the nitriding time required for obtaining a hardness of 580 Hv was as short as about 2 hours for the invention sample in contrast to about 3 hours in the comparative sample.

As described above, according to the present invention, the scattering of oxide-film debris can be diminished without reducing lubricity in spring formation, so that the working environment can be improved. Further, since the occasional occurrence of microcracks attributable to an oxide film can be inhibited, the fatigue properties of the spring obtained can be prevented from decreasing.

In addition, it is possible not only to reduce the time required for the step of removing the oxide film before nitriding treatment or to omit that step, but also to reduce the time required for nitriding treatment. Thus, the efficiency of nitriding treatment can be improved.

## Claims

1. An oil-tempered wire comprising a steel wire having thereon an oxide film having a thickness of from 1.0 µm to 0.5 µm, and further having thereon a lubricating coating film comprising at least one of a lubricating oil and an organic compound.

2. The oil-tempered wire as claimed in claim 1, wherein the amount of the lubricating coating film is from 3 to 15 g/m².

3. The oil-tempered wire as claimed in claim 1, wherein said organic compound is selected from the group consisting of a polytrifluoroethylene resin, a polytetrafluoroethylene resin, and an amino acid compound.

4. A process for producing an oil-tempered wire, said process comprising the steps of:
cleaning a drawn wire by a chemical or mechanical means to remove any pretreating agent or drawing lubricant remaining on the surface of said drawn wire;
heating said cleaned wire in an atmosphere of an inert gas or nitrogen;
quenching said heated wire to conduct hardening;
tempering said hardened wire in an inert gas, a nitrogen atmosphere or a molten metal;
to have an oxide film having a thickness of from 1.0 µm to 0.5 µm on the surface of said wire; and
forming on said oxide film a coating film comprising at least one of a lubricating oil and an organic compound.

5. A coiled spring produced by coiling an oil-tempered wire comprising a steel wire having thereon an oxide film having a thickness of from 1.0 µm to 0.5 µm, and further having thereon a lubricating coating film comprising at least one of a lubricating oil and an organic compound.

## Patentansprüche

1. Ölgehärteter Draht umfassend einen Stahldraht mit einer Oxidschicht auf dieser, mit einer Dicke von 1,0 µm bis 0,5 µm und des Weiteren mit einer schmierenden Beschichtung auf dieser, umfassend wenigstens eines gewählt aus einem Schmieröl und einer organischen Verbindung.

2. Ölgehärteter Draht nach Anspruch 1, wobei die Menge der schmierenden Beschichtung 3 bis 15 g/m² beträgt.

3. Ölgehärteter Draht nach Anspruch 1, wobei die organische Verbindung gewählt ist aus der Gruppe bestehend aus einem Polytrifluorethylenharz, einem Polytetrafluorethylenharz und einer Aminosäureverbindung.

4. Verfahren zur Herstellung eines ölgehärteten Drahtes, wobei das Verfahren die Schritte umfasst:
Reinigen eines gezogenen Drahtes durch ein chemisches oder mechanisches Mittel, um ein Vorbehandlungsmittel oder ein Ziehschmiermittel zu entfernen, welche auf der Oberfläche des gezogenen Drahtes zurückgeblieben sind;
Erwärmen des gereinigten Drahtes in einer Atmosphäre eines Schutzgases oder Stickstoffs;
Abschrecken des erwärmten Drahtes um ein Härten durchzuführen;
Tempern des gehärteten Drahtes in einem Schutzgas, einer Stickstoffatmosphäre oder einem geschmolzenen Metall;
um eine Oxidschicht mit einer Dicke von 1,0 µm bis 0,5 µm auf der Oberfläche des Drahtes zu erzielen; und
Bilden einer Beschichtung auf der Oxidschicht, umfassend wenigstens eines gewählt aus einem Schmieröl und einer organischen Verbindung.

5. Aufgewickelte Feder hergestellt durch das Aufwickeln eines ölgehärteten Drahtes, umfassend einen Stahldraht mit einer Oxidschicht mit einer Dicke von 1,0 µm bis 0,5 µm auf diesem, und des Weiteren mit einer schmierenden Beschichtung auf dieser, umfassend wenigstens eines gewählt aus einem Schmieröl und einer organischen Verbindung.

## Revendications

1. Fil revenu à l'huile comprenant un fil en acier comportant un film d'oxyde ayant une épaisseur de 1,0 µm à 0,5 µm, et comportant en outre un film de revêtement lubrifiant comprenant au moins une substance parmi une huile lubrifiante et un composé organique.

2. Fil revenu à l'huile selon la revendication 1 où la quantité du film de revêtement lubrifiant est de 3 à 15 g/m².

3. Fil revenu à l'huile selon la revendication 1 où ledit composé organique est choisi dans le groupe consistant en une résine de polytrifluoroéthylène, une résine de polytétrafluoroéthylène et un composé d'acide aminé.

4. Procédé pour produire un fil revenu à l'huile, ledit procédé comprenant les étapes de :
nettoyage d'un fil étiré par un moyen chimique ou mécanique pour retirer tout agent de prétraitement ou tout lubrifiant d'étirage restant sur la surface dudit fil étiré ;
chauffage dudit fil nettoyé dans une atmosphère d'un gaz inerte ou d'azote ;
trempe dudit fil chauffé pour réaliser un durcissement ;
revenu dudit fil durci dans un gaz inerte, une atmosphère d'azote ou un métal fondu ;
pour avoir un film d'oxyde ayant une épaisseur de 1,0 µm à 0,5 µm sur la surface dudit fil ; et
formation sur ledit film d'oxyde d'un film de revêtement comprenant au moins une substance parmi une huile lubrifiante et un composé organique.

5. Ressort à boudin produit par enroulement d'un fil revenu à l'huile comprenant un fil en acier comportant un film d'oxyde ayant une épaisseur de 1,0 µm à 0,5 µm et comportant en outre un film de revêtement lubrifiant comprenant au moins une substance parmi une huile lubrifiante et un composé organique.
